# EUROPÄISCHE PATENTANMELDUNG

(11) **EP 0 784 182 A1**
(43) Veröffentlichungstag der Anmeldung: **16.07.1997**
(21) Anmeldenummer: 96119807.4
(22) Anmeldetag: 10.12.1996
(51) Int. Cl.: F16L 33/22

(54) **Armatur für Schlauchleitungen**

(30) Priorität: 10.01.1996 DE 29600372 U
(71) Anmelder: Schieffer GmbH & Co Kommanditgesellschaft, D-59557 Lippstadt (DE)
(72) Erfinder: Wulf, Johannes, 59609 Anröchte (DE)
(74) Vertreter: Gossel, Hans K., Dipl.-Ing.

(57) **Zusammenfassung**

Die Erfindung betrifft eine Armatur für Schlauchleitungen mit einem Schlauchnippel (2) und einer Überwurfmutter (4). Erfindungsgemäß sind der Schlauchnippel (2) und/oder die Überwurfmutter (4) aus einem glasfasergefüllten Kunststoff auf Polyamidbasis gefertigt.

## Beschreibung

Die Erfindung betrifft eine Armatur für Schlauchleitungen.

Armaturen für Schlauchleitungen sind aus dem Stand der Technik bekannt. Sie bestehen üblicherweise aus einem Schlauchnippel und einer Überwurfmutter, wobei diese Bauteile jeweils aus Metall bestehen, und gegebenenfalls verzinkt oder vermessingt sind.

Derartige Armaturen finden insbesondere Verwendung bei Hochdruckschlauchleitungen, beispielsweise bei Hochdruckschlauchleitungen für Hochdruckreinigungsgeräte, oder bei Waschgeräten.

Zur Befestigung eines Schlauchendes an einem Anschlußteil wird hierbei zunächst die Überwurfmutter auf den Schlauch aufgebracht. Dann wird der Nippel mit einem ersten, schmaleren Ende in die Schlauchöffnung eingeführt. Das Kopfende des Nippels weist einen Bereich mit einem größeren Durchmesser als der Schlauch, in den der Nippel eingesteckt ist, auf. Dieser Kopfbereich steht derart über den Schlauchdurchmesser vor, daß die Überwurfmutter nun nicht mehr über dieses Schlauchende abgezogen werden kann. Die Überwurfmutter ist mit einem Gewinde ausgebildet, welches mit einem entsprechenden Gegengewinde eines Anschlußelementes zusammenwirkt.

Die im Stand der Technik verwendeten Schlauchnippel und Überwurfmuttern sind aus Metall gefertigt. Solche Schlauchnippel und Überwurfmuttern weisen insofern Nachteile auf, als sie ein hohes Gewicht aufweisen, und in der Herstellung aufwendig und teuer sind.

Aufgabe der Erfindung ist daher die Schaffung einer Armatur für Schlauchleitungen, deren Bauteile ein niedriges Gewicht aufweisen und preiswert in der Herstellung sind.

Diese Aufgabe wird erfindungsgemäß durch eine gattungsgemäße Armatur für Schlauchleitungen gelöst, bei welcher der Schlauchnippel und/oder die Überwurfmutter aus einem glasfasergefüllten Kunststoff auf Polyamidbasis gefertigt sind.

Weitere Vorteile der verwendeten glasfaserverstärkten Kunststoffe auf Polyamidbasis sind niedrigere Bauteilkosten, höhere Lebensdauer, niedrigere Bauteilgewichte, Korrosionsbeständigkeit, geringe Emission bei der Teileherstellung sowie Einfärbbarkeit der Bauteile.

Nach einer vorteilhaften Ausgestaltung handelt es sich bei den Glasfasern um langfaserige Glasfasern. Die Verwendung solcher langfaserigen Glasfasern führt zu hoher Festigkeit des Werkstoffs.

Nach einer weiteren vorteilhaften Ausgestaltung handelt es sich bei dem verwendeten Kunststoff um den von der Hoechst AG unter der Bezeichnung "Celstran" vertriebenen Thermoplast-Kunststoff (z. B. Celstran PA66-GF50, Celstran PA66-GF40). Dieser Werkstoff zeichnet sich durch geringe Ermüdung bei dynamischer Belastung und große Formtreue aus.

Celstran weist eine hohe Schlagzähigkeit bzw. eine hohe Arbeitsaufnahme beim Bruch auf. Eine hohe Schlagzähigkeit ist auch bei tiefen Temperaturen (beispielsweise -30°C) gegeben. Es ist insgesamt eine hohe Steifigkeit und Festigkeit gewährleistet, sowie ein nur geringer Abfall der Steifigkeit bei erhöhten Temperaturen. Der Werkstoff weist ferner ein sehr gutes Abriebverhalten auf, sowie eine geringe Kriechneigung und geringe Ermüdung bei dynamischer Belastung. Bei Verwendung eines derartigen Werkstoffes sind Dimensionsstabilität und geringer Verzug gewährleistet.

Ausführungsbeispiele der Erfindung werden nun anhand der beigefügten Zeichnungen näher erläutert.

Es zeigt
- Fig. 1: eine seitliche Schnittansicht einer ersten Ausführungsform einer erfindungsgemäßen Armatur,
- Fig. 2: eine Seitenansicht eines Stecknippels für einen Waschgeräteschlauchanschluß gemäß einer zweiten Ausführungsform der vorliegenden Erfindung,
- Fig. 3: eine Draufsicht auf eine Überwurfmutter, wie sie bei einer erfindungsgemäßen Armatur Verwendung findet,
- Fig. 4: eine Seitenansicht der Überwurfmutter gemäß Fig. 3.

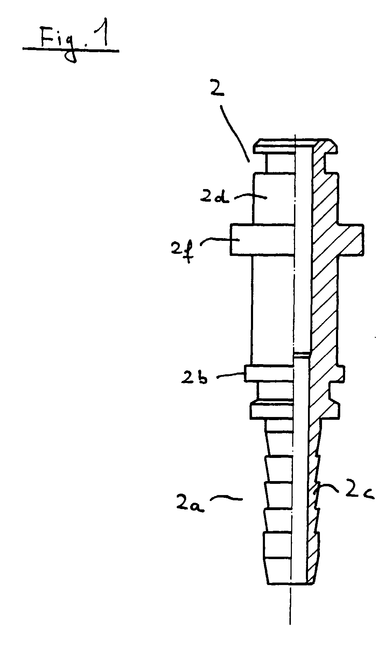

Fig. 1 zeigt eine erfindungsgemäße Armatur, bei der ein Nippel 2 mit einem schmalen Ende 2a in ein Ende eines Schlauches einführbar ist. Der Nippel 2 ist bis etwa zum ringförmigen Vorsprung 2b in den Schlauch einführbar. Ein gezackter bzw. geriffelter Bereich 2c auf dem schmalen Nippelende 2a bewirkt eine verstärkte Reibverbindung zwischen Nippel 2 und Schlauch.

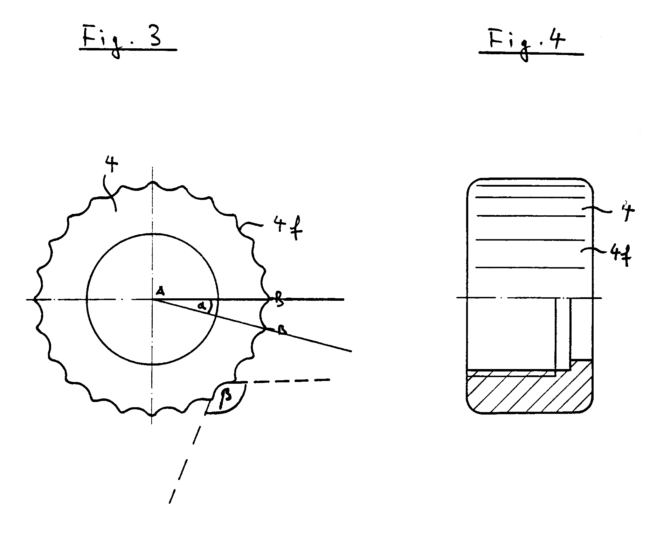

Eine Überwurfmutter 4 weist eine untere Öffnung auf, deren Durchmesser größer als der Durchmesser eines ringförmigen Vorsprungs 2b des Nippels 2, jedoch kleiner als der Durchmesser eines weiteren ringförmigen Vorsprungs 2f ist. Die Überwurfmutter 4 ist somit nach Einschieben des Nippels 2 in das Ende des Schlauches an diesem Ende nicht mehr vom Schlauch bzw. dem Nippel 2 trennbar, da ihre Unterseite 4b (siehe auch Fig. 3) mit dem ringförmigen Vorsprung 2f in Eingriff kommt.

Die in Fig. 1 dargestellte Armatur wird mit einem nicht dargestellten Anschlußelement dadurch verbunden, daß ein Innengewinde der Überwurfmutter 4 mit einem entsprechenden Außengewinde des Anschlußteils zusammenwirkt.

Es wäre selbstverständlich ebenfalls möglich, die Überwurfmutter mit einem Außengewinde auszubilden, welche dann mit einem entsprechenden Innengewinde des Anschlußteils zusammenwirken würde.

Sowohl der Schlauchnippel 2 als auch die Überwurfmutter 4 bestehen erfindungsgemäß aus einem mit Glasfasern gefüllten Kunststoff auf Polvamidbasis. Besonders bevorzugt hierbei sind Langfaserwerkstoffe, wie etwa Celstran.

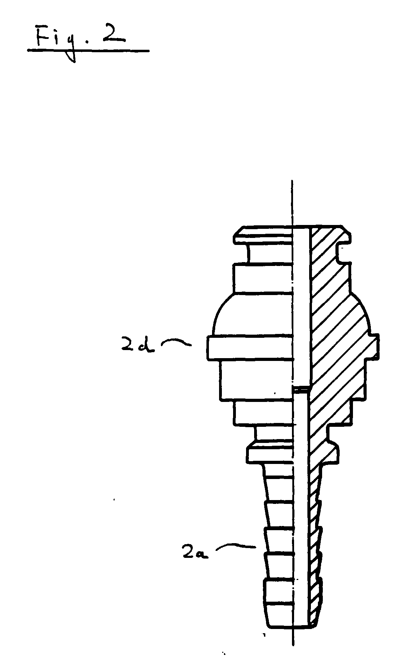

Fig. 2 zeigt eine weitere Ausführungsform eines Schlauchnippels. Die in Fig. 2 dargestellte Ausführungsform findet insbesondere bei Waschgeräten Verwendung. Im Vergleich zu dem in Fig. 1 dargestellten Schlauchnippel weist die Ausführungsform gemäß Fig. 2 ein kürzeres Nippelende 2a auf, während der Kopfbereich 2d insgesamt mit einem relativ größeren Durchmesser ausgebildet ist.

In den Figuren 3 und 4 ist in Draufsicht bzw. in Seitenansicht eine Überwurfmutter 4 dargestellt, wie sie bei einer erfindungsgemäßen Armatur Verwendung findet.

Die Außenfläche der Überwurfmutter 4 ist mit einer Riffelung 4f ausgebildet, welche die Handhabbarkeit der Überwurfmutter beim Verschrauben mit dem Gegengewinde des Anschlußelements erleichtert.

Besonders bevorzugt ist hierbei, daß zwei von der Mittelachse A der Überwurfmutter ausgehende Schenkel, welche benachbarten Riffelungshochpunkte B schneiden, einen Winkel alpha von 15° einschließen. Ferner ist bevorzugt, daß der Winkel beta zwischen zwei einen gemeinsamen Riffelungstiefpunkt umgebenden Riffelungsseiten etwa 120° beträgt.

## Patentansprüche

1. Armatur für Schlauchleitungen mit einem Schlauchnippel (2) und einer Überwurfmutter (4),
**dadurch gekennzeichnet**,
daß der Schlauchnippel (2) und/oder die Überwurfmutter (4) aus einem glasfasergefüllten Kunststoff auf Polyamidbasis gefertigt sind.

2. Armatur nach Anspruch 1, dadurch gekennzeichnet, daß die Glasfasern langfaserige Fasern sind.

3. Armatur nach einem der vorhergehenden Ansprüche, dadurch gekennzeichnet, daß der Kunststoff Celstran ist.
